# EUROPEAN PATENT SPECIFICATION

(11) **EP 3 560 876 B1**
(45) Date of publication and mention of the grant of the patent: **02.06.2021**
(21) Application number: 18169863.0
(22) Date of filing: 27.04.2018
(51) Int. Cl.: B66B 11/02

(54) **ELEVATOR CAR AND ELEVATOR SYSTEM**
AUFZUGSKABINE UND AUFZUGSSYSTEM
CABINE D'ASCENSEUR ET SYSTÈME D'ASCENSEUR

(43) Date of publication of application: 30.10.2019
(73) Proprietor: Otis Elevator Company, Farmington, Connecticut 06032 (US)
(72) Inventor: CORTES, Juan, 28919 Madrid (ES)
(74) Representative: Schmitt-Nilson Schraud Waibel Wohlfrom Patentanwälte Partnerschaft mbB

(56) References cited:
- JP-A- H10 139 294
- JP-A- 2001 316 061
- JP-B1- 6 194 065
- JP-B2- 5 452 012

## Description

The invention relates to an elevator car with a removable cover and to an elevator system comprising such an elevator car. The invention further relates to methods of mounting and removing a cover plate to/from an elevator car.

An elevator system comprises at least one elevator car traveling along a hoistway between a plurality of landings. The elevator car has a ceiling. The ceiling may include a removable cover for closing an opening formed within the ceiling.

According to JP H10 139 294 A a side frame of an elevator car is composed of a pair of vertical frame members positioned on both left and right ends of a side surface, and a horizontal frame member positioned on these upper ends. A control board main body to control operation of a car and opening-closing of a door is arranged in a second casing part adjacently arranged on the lower side of a first casing part to house a telephone to emergently communicate with an external part. A control board for controlling operation of the elevator car and opening-closing of the door is housed between the vertical frame members of the side frame, and does not protrude outside from these vertical frame members.

It is desirable to provide an elevator car comprising a ceiling with an opening and a removable cover which allows compensating tolerances of manufacturing so that the opening is reliably closed by the cover.

According to an exemplary embodiment of the invention, an elevator car comprises a frame. The frame in particular may be arranged horizontally in an upper portion of the elevator car forming part of a ceiling of the elevator car. The elevator car further comprises a removable cover plate. The cover plate includes at least one aperture formed in a first end of the cover plate allowing at least one fixing element extending from the frame to pass through the at least one aperture for fixing the cover plate to the frame. At least one permanent magnet is provided at an opposing second end of the cover plate and/or at a portion of the frame abutting the second end of the cover plate. The at least one permanent magnet is configured for fixing the second end of the cover plate to an adjacent portion of the frame, in particular to a metallic portion of the frame, by means of its magnetic force. The second end of the cover plate is provided with a c-shaped profile configured for embracing a portion of the frame when the cover plate is mounted to the frame.

Exemplary embodiments of the invention further include an elevator system comprising at least one elevator car according to an exemplary embodiment of the invention.

Exemplary embodiments of the invention also include a method of removing the cover plate comprising a permanent magnet from such an elevator car, wherein the method includes detaching the c-shaped profile from the portion of the frame and disengaging the at least one fixing element, and removing the cover by disengaging the permanent magnet from the frame.

In case a permanent magnet is provided at the frame of the elevator car, the method includes disengaging the at least one fixing element and removing the cover plate by disengaging the permanent magnet from the cover plate.

Exemplary embodiments of the invention further include a method of mounting a cover plate to an elevator car according to an exemplary embodiment of the invention, wherein the method comprises: positioning the cover plate on the frame so that at least one permanent magnet provided at the cover plate attaches to a portion of the frame, encompassing a portion of the frame with the c-shape profile, and fixing the first end of the cover plate to the frame with at least one fixing element extending through the at least one aperture formed within the cover plate.

Exemplary embodiments of the invention further include a method of mounting a cover plate to an elevator car according to an exemplary embodiment of the invention, wherein the method comprises: positioning the cover plate on the frame so that at least one permanent magnet provided at the frame attaches to the cover plate, encompassing a portion of the frame with the c-shape profile, and fixing the first end of the cover plate to the frame with at least one fixing element extending through the at least one aperture formed within the cover plate.

Exemplary embodiments of the invention allow fixing the cover plate securely to the frame with the position of the cover plate with respect to the frame being set by the fixing elements extending through the apertures formed within the cover plate.

Since the position of the at least one permanent magnet with respect to the frame is variable, variations and tolerances of the dimensions, such as the length of the cover plate and/or of the frame, may be compensated with the cover plate still being securely attached to the frame.

A number of optional features are set out in the following. These features may be realized in particular embodiments, alone or in combination with any of the other features.

A plurality of apertures may be formed within the cover plate, and a plurality of fixing elements may extend from the frame. Providing a plurality of fixing elements in combination with a plurality of apertures allows defining the position of the cover plate with respect to the frame with high accuracy. It in particular allows preventing a rotation of the cover plate around the fixing element(s). It further allows distributing the forces acting onto the fixing elements among a plurality of fixing elements. The apertures and fixing elements may be arranged along a common line.

The at least one fixing element may include a bolt or screw.

A plurality of permanent magnets may be provided at an opposing second end of the cover plate and/or at the portion of the frame abutting the second end of the cover plate. The permanent magnets in particular may be arranged along a common line. Providing a plurality of magnets increases the magnetic force fixing the cover plate to the frame.

The cover plate and/or the frame may be made at least partially of metal in order to allow the magnets to attach to the cover plate or to the frame by their magnetic forces. Other parts of the cover plate and/or of the frame may be made of plastic for reducing the weight of the cover plate or of the frame, respectively.

The frame may be made at least partially of metal plates, in particular of bent metal plates. Bent metal plates provide a strong frame which is easy to produce at low costs.

The frame and/or the cover plate may have a rectangular shape, in particular a quadratic shape, respectively.

The frame in particular may include longitudinal bars extending in a longitudinal direction and crossbars extending between the longitudinal bars. The crossbars in particular may extend orthogonally to the extension of the longitudinal bars so that the longitudinal bars and the crossbars form a rectangular frame. The crossbars may include outer crossbars extending between the ends of the longitudinal bars and inner crossbars extending between the longitudinal bars at positions located in between the outer crossbars.

The frame also may comprise a plurality of longitudinal bars and a plurality of crossbars forming a chessboard like structure comprising at plurality of openings. One or more of the openings may be covered by a removable cover plate according to an exemplary embodiment of the invention.

The space(s) formed between the inner crossbars and the space(s) formed between an outer crossbar and an adjacent inner crossbar may be closed by at least one cover plate, respectively. At least one cover plate may be a removable cover plate according to an exemplary embodiment of the invention.

At least one fixing element may be provided with a locking mechanism for preventing an unauthorized removal of the cover plate.

The cover plate may be at least partially transparent in order to allow light to pass through the cover plate.

At least one lighting device configured for lighting an interior space of the elevator car may be mounted to the cover plate.

In the following an exemplary embodiment of the invention is described with reference to the enclosed figures.
Figure 1 schematically depicts an elevator system comprising an elevator car according to an exemplary embodiment of the invention.
Figure 2 depicts a perspective view of a ceiling of an elevator car according to an exemplary embodiment of the invention including a cover plate arranged in a closed position.
Figure 3 depicts a side view of the configuration shown in Figure 2.
Figure 4 depicts a perspective view of the ceiling shown in Figures 2 and 3 with the cover plate being arranged in an open position.

Figure 5 depicts a side view of the configuration shown in Figure 4.

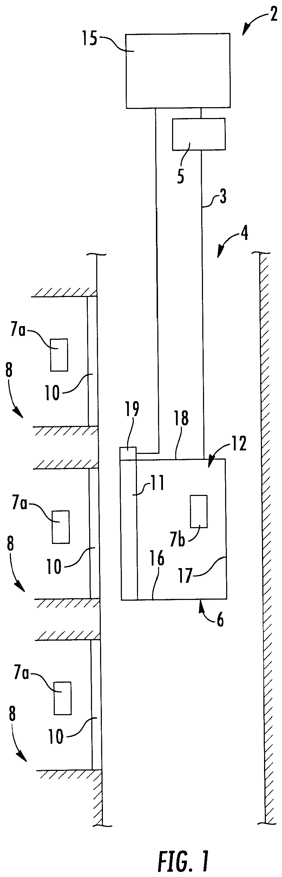

Figure 1 schematically depicts an elevator system 2 comprising an elevator car 6 according to an exemplary embodiment of the invention.

The elevator system 2 comprises a hoistway 4 extending in a longitudinal direction between a plurality of landings 8 located on different floors.

The elevator car 6 comprises a floor 16, a ceiling 18 and sidewalls 17 extending between the floor 16 and the ceiling 18 defining an interior space 12 of the elevator car 6. Only one sidewall 17 is depicted in the schematic illustration of Fig. 1.

The elevator car 6 is movably suspended within the hoistway 4 by means of a tension member 3. The tension member 3, for example a rope or belt, is connected to a drive 5, which is configured for driving the tension member 3 in order to move the elevator car 6 along the longitudinal direction / height of the hoistway 4 between the plurality of landings 8.

Each landing 8 is provided with a landing door (elevator hoistway door) 10, and the elevator car 6 is provided with a corresponding elevator car door 11 allowing passengers to transfer between a landing 8 and the interior space 12 of the elevator car 6 when the elevator car 6 is positioned at the respective landing 8.

The exemplary embodiment of the elevator system 2 shown in Fig. 1 employs a 1:1 roping for suspending the elevator car 6. The skilled person, however, easily understands that the type of the roping is not essential for the invention and that different kinds of roping, e.g. a 2:1 roping, may be used as well. The elevator system 2 may further include a counterweight (not shown) moving concurrently and in opposite direction with respect to the elevator car 6. Alternatively, the elevator system 2 may be an elevator system 2 without a counterweight, as it is shown in Fig. 1. The drive 5 may be any form of drive used in the art, e.g. a traction drive, a hydraulic drive or a linear drive. The elevator system 2 may have a machine room or may be a machine room-less elevator system. The elevator system 2 may use a tension member 3, as it is shown in Fig. 1, or it may be an elevator system without a tension member 3, comprising e.g. a hydraulic drive or a linear drive (not shown).

The drive 5 is controlled by an elevator control 15 for moving the elevator car 6 along the hoistway 4 between the different landings 8.

Input to the elevator control 15 may be provided via landing control panels 7a, which are provided on each landing 8 close to the elevator landing doors 10, and/or via a car operation panel 7b provided inside the elevator car 6.

The landing control panels 7a and the car operation panel 7b may be connected to the elevator control 15 by means of electrical lines, which are not shown in Fig. 1, in particular by an electric bus, e.g. a field bus such as a CAN bus, or by means of wireless data connections.

In order to determine the current position of the elevator car 6, the elevator car 6 is provided with a position sensor 19. The position sensor 19 may be arranged at the top of the elevator car 6 as shown in Fig. 1. Alternatively, the position sensor 19 may be provided at a side of the elevator car 6 or at the bottom, e.g. below a floor 16, of the elevator car 6.

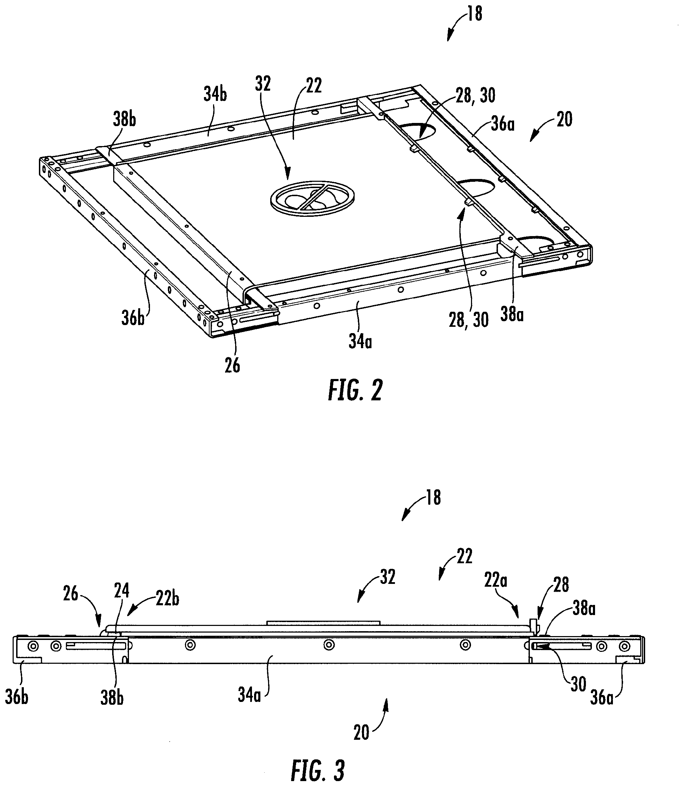

Figure 2 shows a perspective view of a ceiling 18 of an elevator car 6 according to an exemplary embodiment of the invention. The ceiling includes a frame 20 and a cover plate 22 arranged in a closed position, i.e. in a position in which the cover plate 22 is contact with the frame 20. Figure 3 depicts a side view of said closed configuration.

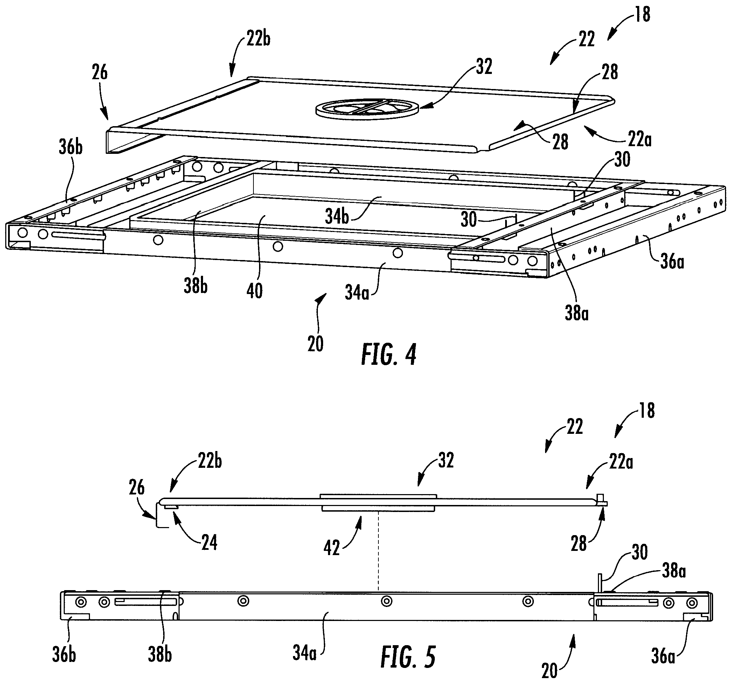

Figure 4 shows a perspective view of the ceiling 18 shown in Figures 2 and 3, wherein the cover plate 22 is arranged in an open position, i.e. in a position in which the cover plate 22 is spaced apart from the frame 20. Figure 5 depicts a side view of said open configuration.

The frame 20 comprises a plurality of bars 34a, 34b, 36a, 36b, 38a, 38b, in particular two longitudinal bars 34a, 34b and four crossbars 36a, 36b, 38a, 38b respectively extending between the longitudinal bars 34a, 34b. The crossbars 36a, 36b, 38a, 38b in particular extend orthogonally to the longitudinal bars 34a, 34b forming a rectangular frame 20.

The crossbars 36a, 36b, 38a, 38b include outer crossbars 36a, 36b respectively extending between the ends of the longitudinal bars 34a, 34b; and inner crossbars 38a, 38b, respectively extending between the longitudinal bars 34a, 34b at positions located in between the outer crossbars 36a, 36b.

The inner crossbars 38a, 38b and the inner portions of the longitudinal bars 34a, 34b, i.e. the portions of the longitudinal bars 34a, 34b extending between the inner crossbars 38a, 38b, define a rectangular opening 40 (cf. Fig. 4). The rectangular opening 40 in particular may have the shape of a square.

The cover plate 22 is configured for closing the opening 40. The cover plate 22 approximately has the same dimensions as the opening 40.

Two apertures 28 are formed at a first end 22a of the cover plate 22 arranged next to a first inner crossbar 38a. The first crossbars 36a, 38a and first end 22a of the cover plate 22 are shown on the right sides of Figures 2 to 5, respectively.

Fixing elements 30, such as bolts or screws, are provided at the first inner crossbar 38a. The positions of the fixing element 30 match with the positions of the apertures 28 formed within the cover plate 22. When the cover plate 22 is mounted to the frame 20, the fixing elements 30 extend through the apertures 28 for fixing the cover plate 22 to the frame 20.

Although two openings 28 and fixing elements 30 are depicted in the figures, the skilled person will understand that the number of fixing elements 30 and corresponding openings 28 may be adjusted according to the actual needs.

At least one permanent magnet 24 (see Figures 3 and 5) is provided at the opposing second end 22b of the cover plate 22 arranged next to a second inner crossbar 38b. The second crossbars 36b, 38b and the second end 22b of the cover plate 22 are shown on the left sides of Figures 2 to 5.

At least a portion of the second inner crossbar 38b is made of a magnetic material, e.g. a metal. In consequence, when the cover plate 22 is arranged on top of the frame 20, as illustrated in Figures 2 and 3, the at least one permanent magnet 24 is attracted by magnetic force to the second inner crossbar 38b and thereby attached to the second inner crossbar 38b.

As a result, the cover plate 22 is securely fixed to the frame 20 by the fixing elements 30 extending through the apertures 28 at its first end 22a, and by the at least one permanent magnet 24 interacting with the second inner crossbar 38b at its opposing second end 22.

The position of the cover plate 22 with respect to the frame 20 is set by the fixing elements 30 extending through the apertures 28 formed in the first end 22a of the cover plate 22.

The position of the permanent magnet(s) 24 with respect to the second inner crossbar 38b, however, is variable to a certain extent. This variability allows compensating for variations and tolerances of the dimensions, in particular the length of the cover plate 22 and/or the distance between the inner crossbars 38a, 38b, while still securely attaching the cover plate 22 to the frame 20.

Although only a single permanent magnet 24 is visible in Figures 3 and 5, respectively, the skilled person will understand that a plurality of permanent magnets 24 may be provided at the second end 22b of the cover plate 22 for increasing the holding force fixing the cover plate 22 to the frame 20.

Alternatively or additionally, at least one permanent magnet (not shown) may be mounted to the second inner crossbar 38b in order to interact with the second end 22b of the cover plate 22. In this case the cover plate 22 is made at least partially of a magnetic material, in particular a metallic material. Alternatively, in case the cover plate 22 is made of a non-magnetic material, e.g. a plastic material, a magnetic material, in particular a metallic material, such as a metallic strip, may be provided at least at the second end 22b of the cover plate 22.

In order to prevent an unauthorized removal of the cover plate 22 from inside the elevator car 6, a c-shaped profile 26 is provided at the second end 22b of the cover plate 22. The c-shaped profile 26 may be formed integrally with the cover plate 22. Alternatively, the c-shaped profile 26 may be attached to the second end 22b of the cover plate 22.

When the cover plate 22 is mounted to the frame 20, as depicted in Figures 2 and 3, the c-shaped profile 26 embraces the second inner crossbar 38b. Such a configuration prevents the second end 22b of the cover plate 22 from being lifted from the second inner crossbar 38b without opening/removing the fixing elements 30 at the first inner crossbar 38a.

I.e. in order to remove the cover plate 22 from the frame 20, it is necessary to open/remove the fixing elements 30 first. Opening/removing the fixing elements 30 may be possible from inside and/or from outside the elevator car 6.

Optionally, the fixing elements 30 may be provided with locking mechanisms (not shown), such as a mechanical lock or a special type of screws which may be removed only with a special key in order to prevent unauthorized persons from removing the cover plate 22.

After the fixing elements 30 have been opened/removed, the first side 22a of the cover plate 22 may be detached from the first inner crossbar 38a. After the first side 22a of the cover plate 22 has been detached from the first inner crossbar 38a, the second side 22b of the cover plate 22 may be separated from the second inner crossbar 38b overcoming the magnetic forces of the permanent magnet(s) 24, and the c-shaped profile 26 may be detached from the second inner crossbar 38b.

Optionally, the cover plate 22 may be provided with at least one lighting device 42 configured for lighting the interior space 12 of the elevator car 6.

The at least one lighting device 42 may be mounted to a bottom side of the cover plate 22 facing the interior space 12, as it is shown in Figure 5. Alternatively, the cover plate 22 may be at least partially transparent. In such a configuration, the at least one lighting device 42 may be attached to the upper side of the cover plate 22 outside the elevator car 6 facing a transparent portion of the cover plate 22.

Electrical connectors (not shown) may be provided at at least one side 22a, 22b of the cover plate 22 for delivering electric energy to the at least one lighting device 42.

In the embodiment depicted in Figures 2 to 5, a graphic sign 32 instructing people, such as maintenance personnel, not to step onto the cover plate 22 is provided on the upper side of the cover plate 22.

### References

- 2: elevator system
- 3: tension member
- 4: hoistway
- 5: drive
- 6: elevator car
- 7a: landing control panel
- 7b: car operation panel
- 8: landing
- 10: landing door
- 11: elevator car door
- 12: interior space of the elevator car
- 15: elevator control
- 16: floor of the elevator car
- 17: sidewall of the elevator car
- 18: ceiling of the elevator car
- 19: position sensor
- 20: frame
- 22: cover plate
- 24: permanent magnet
- 26: c-shaped profile
- 28: aperture
- 30: fixing element
- 32: sign
- 34a, 34b: longitudinal bars
- 36a, 36b: outer crossbars
- 38a, 38b: inner crossbars
- 40: opening
- 42: lighting device

## Claims

1. Elevator car (6) comprising a frame (20) and a removable cover plate (22), the cover plate (22) comprising:
at least one aperture (28) formed in a first end (22a) of the cover plate (22) allowing at least one fixing element (30) extending from the frame (20) to pass through the at least one aperture (28) for fixing the cover plate (22) to the frame (20); and
at least one permanent magnet (24) provided at an opposing second end (22b) of the cover plate (22) and/or at a portion of the frame (20) abutting the second end (22b) of the cover plate (22);
wherein the at least one permanent magnet (24) is configured for fixing the second end (22b) of the cover plate (22) to a portion of the frame (20); and
**characterized in that** the second end (22b) of the cover plate (22) is provided with a c-shaped profile (26) configured for embracing a portion of the frame (20) when the cover plate (22) is mounted to the frame (20).

2. Elevator car (6) according to claim 1, wherein a plurality of apertures (28) are formed within the cover plate (22), the apertures (28) in particular being arranged along a common line.

3. Elevator car (6) according to claim 1 or 2, wherein a plurality of permanent magnets (24) are provided at the second end (22b) of the cover plate (22) and/ or at the portion of the frame (20) abutting the second end (22b) of the cover plate (22), the permanent magnets (24) in particular being arranged along a common line.

4. Elevator car (6) according to any of the preceding claims, wherein the cover plate (22) and/or the frame (20) are at least partially made of metal and/or plastic.

5. Elevator car (6) according to any of the preceding claims, wherein the frame (20) at least partially is made of metal plates, in particular of bent metal plates.

6. Elevator car (6) according to any of the preceding claims, wherein the frame (20) and/or the cover plate (22) have a rectangular shape, in particular a quadratic shape, respectively.

7. Elevator car (6) according to any of the preceding claims, wherein the cover plate (22) is at least partially transparent and/or comprises at least one lighting device (42) for lighting an interior space (12) of the elevator car (6).

8. Elevator car (6) according to any of the preceding claims, wherein the cover plate (22) is fixed to the frame (20) by at least one fixing element (30).

9. Elevator car (6) according to claim 8, wherein the at least one fixing element (30) includes a bolt or a screw.

10. Elevator system (2) comprising at least one elevator car (6) according to any of the preceding claims.

11. Method of removing the cover plate (22) from an elevator car (6) according to claim 8 or 9, wherein the method includes:
disengaging the at least one fixing element (30); and
removing the cover plate (22) by detaching the c-shaped profile (26) from the portion of the frame (20) and disengaging the permanent magnet (24) from the frame (20) or from the cover plate (22).

12. Method of mounting a cover plate (22) to an elevator car (6) according to any of claims 1 to 9, wherein the method comprises:
positioning the cover plate (22) on the frame (20) so that the cover plate (22) is attached to the frame (20) by at least one permanent magnet (24);
encompassing a portion of the frame (20) with the c-shape profile (26) before
fixing the first end (22a) of the cover plate (22) to the frame (20) with at least one fixing element (30) extending through the at least one aperture (28) formed within the cover plate (22).

## Patentansprüche

1. Aufzugskabine (6), einen Rahmen (20) und eine entfernbare Abdeckplatte (22) umfassend, wobei die Abdeckplatte (22) Folgendes umfasst:
mindestens eine Öffnung (28), die in einem ersten Ende (22a) der Abdeckplatte (22) ausgebildet ist und die es mindestens einem Befestigungselement (30), das sich von dem Rahmen (20) aus erstreckt, ermöglicht, durch die mindestens eine Öffnung (28) durchzutreten, um die Abdeckplatte (22) an dem Rahmen (20) zu befestigen; und
mindestens einen Permanentmagneten (24), der an einem entgegengesetzten zweiten Ende (22b) der Abdeckplatte (22) und/oder an einem Abschnitt des Rahmens (20), der an das zweite Ende (22b) der Abdeckplatte (22) angrenzt, bereitgestellt ist;
wobei der mindestens eine Permanentmagnet (24) so konfiguriert ist, dass er das zweite Ende (22b) der Abdeckplatte (22) an einem Abschnitt des Rahmens (20) befestigt; und
**dadurch gekennzeichnet, dass** das zweite Ende (22b) der Abdeckplatte (22) mit einem C-förmigen Profil (26) versehen ist, das zum Umgreifen eines Abschnitts des Rahmens (20) konfiguriert ist, wenn die Abdeckplatte (22) an dem Rahmen (20) angebracht ist.

2. Aufzugskabine (6) nach Anspruch 1, wobei eine Vielzahl von Öffnungen (28) innerhalb der Abdeckplatte (22) ausgebildet sind, wobei die Öffnungen (28) insbesondere entlang einer gemeinsamen Linie angeordnet sind.

3. Aufzugskabine (6) nach Anspruch 1 oder 2, wobei eine Vielzahl von Permanentmagneten (24) an dem zweiten Ende (22b) der Abdeckplatte (22) und/oder an dem Abschnitt des Rahmens (20), der an das zweite Ende (22b) der Abdeckplatte (22) angrenzt, bereitgestellt sind, wobei die Permanentmagneten (24) insbesondere entlang einer gemeinsamen Linie angeordnet sind.

4. Aufzugskabine (6) nach einem der vorstehenden Ansprüche, wobei die Abdeckplatte (22) und/oder der Rahmen (20) mindestens teilweise aus Metall und/oder Kunststoff hergestellt sind.

5. Aufzugskabine (6) nach einem der vorstehenden Ansprüche, wobei der Rahmen (20) mindestens teilweise aus Metallplatten hergestellt ist, insbesondere aus gebogenen Metallplatten.

6. Aufzugskabine (6) nach einem der vorstehenden Ansprüche, wobei der Rahmen (20) und/oder die Abdeckplatte (22) jeweils eine rechtwinklige Form aufweisen, insbesondere eine quadratische Form.

7. Aufzugskabine (6) nach einem der vorstehenden Ansprüche, wobei die Abdeckplatte (22) mindestens teilweise transparent ist und/oder mindestens eine Beleuchtungsvorrichtung (42) zum Beleuchten eines Innenraums (12) der Aufzugskabine (6) umfasst.

8. Aufzugskabine (6) nach einem der vorstehenden Ansprüche, wobei die Abdeckplatte (22) an dem Rahmen (20) durch mindestens ein Befestigungselement (30) befestigt ist.

9. Aufzugskabine (6) nach Anspruch 8, wobei das mindestens eine Befestigungselement (30) einen Bolzen oder eine Schraube beinhaltet.

10. Aufzugsystem (2), mindestens eine Aufzugskabine (6) nach einem der vorstehenden Ansprüche umfassend.

11. Verfahren zum Entfernen der Abdeckplatte (22) von einer Aufzugskabine (6) nach Anspruch 8 oder 9, wobei das Verfahren Folgendes beinhaltet:
Lösen des mindestens einen Befestigungselements (30); und
Entfernen der Abdeckplatte (22) durch Abnehmen des C-förmigen Profils (26) von dem Abschnitt des Rahmens (20) und Lösen des Permanentmagneten (24) von dem Rahmen (20) oder von der Abdeckplatte (22).

12. Verfahren zum Montieren einer Abdeckplatte (22) an einer Aufzugskabine (6) nach einem der Ansprüche 1 bis 9, wobei das Verfahren Folgendes umfasst:
Positionieren der Abdeckplatte (22) an dem Rahmen (20), so dass die Abdeckplatte (22) an dem Rahmen (20) durch mindestens einen Permanentmagneten (24) angebracht ist;
Umgreifen eines Abschnitts des Rahmens (20) mit dem C-förmigen Profil (26) vor dem Befestigen des ersten Endes (22a) der Abdeckplatte (22) an dem Rahmen (20) mit mindestens einem Befestigungselement (30), das sich durch die mindestens eine Öffnung (28) erstreckt, die innerhalb der Abdeckplatte (22) ausgebildet ist.

## Revendications

1. Cabine d'ascenseur (6) comprenant un châssis (20) et une plaque de recouvrement amovible (22), la plaque de recouvrement (22) comprenant :
au moins une ouverture (28) formée dans une première extrémité (22a) de la plaque de recouvrement (22) permettant à au moins un élément de fixation (30) s'étendant depuis le châssis (20) de passer à travers l'au moins une ouverture (28) pour fixer la plaque de recouvrement (22) au châssis (20) ; et
au moins un aimant permanent (24) prévu au niveau d'une seconde extrémité opposée (22b) de la plaque de recouvrement (22) et/ou au niveau d'une partie du châssis (20) venant en butée contre la seconde extrémité (22b) de la plaque de recouvrement (22) ;
dans laquelle l'au moins un aimant permanent (24) est configuré pour fixer la seconde extrémité (22b) de la plaque de recouvrement (22) à une partie du châssis (20) ; et
**caractérisée en ce que** la seconde extrémité (22b) de la plaque de recouvrement (22) est pourvue d'un profil en forme de C (26) configuré pour entourer une partie du châssis (20) lorsque la plaque de recouvrement (22) est montée sur le châssis (20).

2. Cabine d'ascenseur (6) selon la revendication 1, dans laquelle une pluralité d'ouvertures (28) sont formées à l'intérieur de la plaque de recouvrement (22), les ouvertures (28) étant en particulier agencées le long d'une ligne commune.

3. Cabine d'ascenseur (6) selon la revendication 1 ou 2, dans laquelle une pluralité d'aimants permanents (24) sont prévus au niveau de la seconde extrémité (22b) de la plaque de recouvrement (22) et/ou au niveau de la partie du châssis (20) venant en butée contre la seconde extrémité (22b) de la plaque de recouvrement (22), les aimants permanents (24) étant en particulier agencés le long d'une ligne commune.

4. Cabine d'ascenseur (6) selon l'une quelconque des revendications précédentes, dans laquelle la plaque de recouvrement (22) et/ou le châssis (20) sont au moins partiellement constitués de métal et/ou de plastique.

5. Cabine d'ascenseur (6) selon l'une quelconque des revendications précédentes, dans laquelle le châssis (20) est au moins partiellement constitué de plaques métalliques, en particulier de plaques métalliques pliées.

6. Cabine d'ascenseur (6) selon l'une quelconque des revendications précédentes, dans laquelle le châssis (20) et/ou la plaque de recouvrement (22) ont respectivement une forme rectangulaire, en particulier une forme quadratique.

7. Cabine d'ascenseur (6) selon l'une quelconque des revendications précédentes, dans laquelle la plaque de recouvrement (22) est au moins partiellement transparente et/ou comprend au moins un dispositif d'éclairage (42) pour éclairer un espace intérieur (12) de la cabine d'ascenseur (6) .

8. Cabine d'ascenseur (6) selon l'une quelconque des revendications précédentes, dans laquelle la plaque de recouvrement (22) est fixée au châssis (20) par au moins un élément de fixation (30).

9. Cabine d'ascenseur (6) selon la revendication 8, dans laquelle l'au moins un élément de fixation (30) comporte un boulon ou une vis.

10. Système d'ascenseur (2) comprenant au moins une cabine d'ascenseur (6) selon l'une quelconque des revendications précédentes.

11. Procédé de retrait de la plaque de recouvrement (22) d'une cabine d'ascenseur (6) selon la revendication 8 ou 9, dans lequel le procédé comporte :
la libération de l'au moins un élément de fixation (30) ; et
le retrait de la plaque de recouvrement (22) en détachant le profil en forme de C (26) de la partie du châssis (20) et en libérant l'aimant permanent (24) du châssis (20) ou de la plaque de recouvrement (22).

12. Procédé de montage d'une plaque de recouvrement (22) sur une cabine d'ascenseur (6) selon l'une quelconque des revendications 1 à 9, dans lequel le procédé comprend :
le positionnement de la plaque de recouvrement (22) sur le châssis (20) de sorte que la plaque de recouvrement (22) est fixée au châssis (20) par au moins un aimant permanent (24) ;
le fait d'englober une partie du châssis (20) avec le profil en forme de C (26) avant de fixer la première extrémité (22a) de la plaque de recouvrement (22) au châssis (20) avec au moins un élément de fixation (30) s'étendant à travers l'au moins une ouverture (28) formée à l'intérieur de la plaque de recouvrement (22).
